# EUROPÄISCHE PATENTSCHRIFT

(11) **EP 1 348 096 B1**
(45) Veröffentlichungstag und Bekanntmachung des Hinweises auf die Patenterteilung: **01.03.2006**
(21) Anmeldenummer: 01982144.6
(22) Anmeldetag: 25.09.2001
(51) Int. Cl.: F25B 40/04, F25B 27/00, F01P 3/20, B60H 1/32, F01M 5/00

(54) **ANORDNUNG UND VERFAHREN ZUM KÜHLEN**
DEVICE AND METHOD FOR COOLING
DISPOSITIF ET PROCEDE DE REFROIDISSEMENT

(30) Priorität: 23.12.2000 DE 10065002
(43) Veröffentlichungstag der Anmeldung: 01.10.2003
(73) Patentinhaber: ROBERT BOSCH GMBH, 70442 Stuttgart (DE)
(72) Erfinder: LEUTHNER, Stephan, 70372 Stuttgart (DE)
(74) Vertreter: Gleiss & Grosse
(86) Internationale Anmeldenummer: PCT/DE2001/003692
(87) Internationale Veröffentlichungsnummer: WO 2002/052206

(56) Entgegenhaltungen:
- EP-A- 0 256 305
- EP-A- 0 960 755
- EP-A- 1 057 669
- DE-A- 19 500 445
- DE-A- 19 513 710
- FR-A- 2 772 426

## Beschreibung

Die Erfindung betrifft eine Anordnung zum Kühlen mit einem ein Kältemittel führenden Kreislauf, einem ersten Wärmeübertrager zur Abgabe.von Wärme an ein Wärmereservoir, einem zweiten Wärmeübertrager zur Entnahme von Wärme aus einem zu kühlenden Raum, einem Kompressor und einem Expansionsorgan gemäß des Oberbegriffes des Patentanspruchs 1. Die Erfindung betrifft ferner ein Verfahren zum Kühlen mittels einer Anordnung mit einem ein Kältemittel führenden Kreislauf, einem ersten Wärmeübertrager zur Abgabe von Wärme an ein Wärmereservoir, einem zweiten Wärmeübertrager zur Entnahme von Wärme aus einem zu kühlenden Raum, einem Kompressor und einem Expansionsorgan, mit den Schritten: Betreiben des Kompressors und Leiten des Kältemittel durch den das Kältemittel führenden Kreislauf gemäß des Oberbegriffes des Patentanspruchs 12.

### Stand der Technik

Gattungsgemäße Anordnungen und Verfahren werden insbesondere zur Klimatisierung von Fahrzeuginnenräumen verwendet.

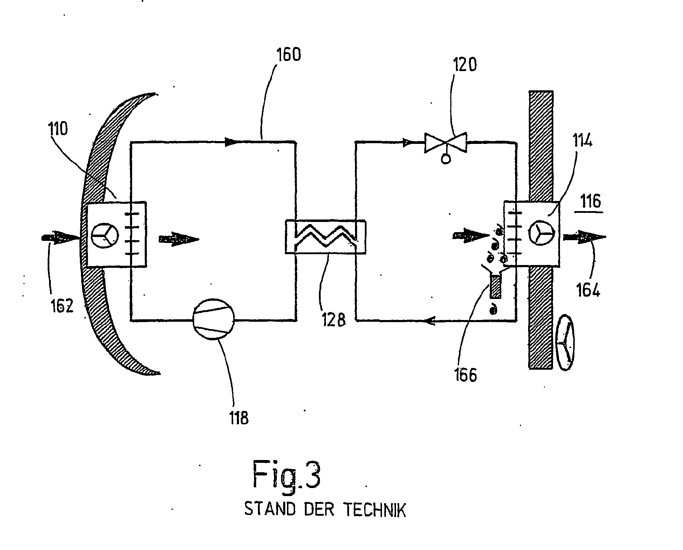

In Figur 3 ist schematisch eine Klimaanlagenschaltung gezeigt. In einen ersten Wärmeübertrager 110 tritt ein erstes Medium ein, welches einen Kreislauf 160 durchströmt. Das Medium gibt an die Umgebungsluft 162 Wärme ab und kühlt somit selbst ab. Aus dem Wärmeübertrager 110 tritt ein abgekühltes Medium aus. Dieses abgekühlte Medium wird nun durch einen inneren Wärmeübertrager 128 geleitet, dessen Funktion weiter unten erläutert wird. Nach dem Austritt des Mediums aus dem inneren Wärmeübertrager 128 tritt das Medium in ein Expansionsorgan 120 ein. Das Medium kühlt durch Expansion stark ab und wird nachfolgend einem zweiten Wärmeübertrager 114 zugeführt. In diesem Wärmeübertrager 114 kann das kalte Medium warme Umgebungsluft beziehungsweise Umluft abkühlen und in Form von kalter Luft 164 einem zu kühlenden Raum, beispielsweise dem Kraftfahrzeuginnenraum, zur Verfügung stellen. Bei diesem Vorgang kommt es zur Bildung von Kondensat 166. Das nun aufgrund des Wärmeaustauschs in dem Wärmeübertrager 114 verdampfte und eventuell erwärmte Medium tritt aus dem Wärmeübertrager 114 aus und durchströmt nachfolgend wiederum den inneren Wärmeübertrager 128. Nach Austritt aus dem inneren Wärmeübertrager 128 gelangt das Medium in einen Kompressor 118, wo es durch Kompression erwärmt wird. Somit steht wieder ein erwärmtes Medium zur Verfügung, welches in den ersten Wärmeübertrager 110 zum Wärmeaustausch eintreten kann. Der Kreislauf ist geschlossen.

Der innere Wärmeübertrager 128 dient der Leistungssteigerung im Kreislauf. So wird das Medium vor dem Eintritt in das Expansionsorgan 120 durch das rückströmende Medium, welches aus dem zweiten Wärmeübertrager 114 ausgetreten ist, gekühlt, während das rückströmende Medium im Gegenzug erwärmt wird. Es können somit höhere Temperaturdifferenzen und somit eine Steigerung des Wirkungsgrads in dem Kreislauf erreicht werden.

Als Medium im Kühlkreislauf gewinnt zunehmend CO₂ an Bedeutung. Ausgehend von den Vorschriften und den Regelungen für den Ausstieg aus der Anwendung von FCKW, nimmt das Interesse an diesem natürlichen Kältemittel zu.

Im Vergleich zu konventionellen Kältemitteln hat CO₂ eine geringe kritische Temperatur von 31,1 °C. Oberhalb dieser Temperatur ist eine Verflüssigung durch Druckerhöhung nicht mehr möglich. Bei mittleren und hohen Umgebungstemperaturen erfolgt die Wärmeabgabe daher bei einem sogenannten überkritischen Druck, das heißt bei einem Druck, welcher für CO₂ oberhalb von 73,8 bar liegt. Bei überkritischem Druck erfolgt die Wärmeabgabe nicht, wie bei den konventionellen Kältemitteln, durch Kondensation, welche nahezu bei konstanter Temperatur stattfindet; vielmehr sind Druck und Temperatur voneinander unabhängig. Es liegt eine Gaskühlung vor. Die Zustände im Verdampfer sind jedoch weiterhin unterkritisch. Bemerkenswert an dem Verhalten von CO₂ ist ferner, dass bereits im Leerlauf Temperaturen von etwa 140 bis 150 °C erreicht werden.

Aus der DE 195 13 710 A1 ist ein Verfahren zum Betrieb einer Klimaanlage sowie eine Anordnung derselben in einem Kraftfahrzeug bekannt, bei dem ein Kompressor der Klimaanlage über eine Kupplung mit dem Verbrennungsmotor und über eine Kupplung mit einem Elektromotor verbindbar ist, der seinerseits von einer Batterie speisbar ist. Der Klimaanlagenkompressor kann daher auch bei stillgesetztem Verbrennungsmotor elektromotorisch betrieben werden.

Aus der DE 195 00 445 A1 ist eine Kühlanordnung einem Verbrennungsmotor mit Wasserkühlung bekannt, deren durch den Verbrennungsmotor und einen Kühler fließendes Kühlwasser durch eine Pumpe umgewälzt wird, wobei ein am Kühler angeordneter Lüfter durch einen regelbaren Elektromotor angetrieben ist, der neben dem Lüfter auch die Kühlwasserpumpe antreibt.

Aus der gattungsbildenden EP 0 256 305 A2 ist ein Kraftfahrzeug mit einem wassergekühlten Verbrennungsmotor und einer Klimaanlage bekannt, mit einem ein Kältemittel führenden Kreislauf, einem ersten Wärmeübertrager zur Abgabe von Wärme an ein Wärmereservoir, einem zweiten Wärmeübertrager zur Entnahme von Wärme aus einem zu kühlenden Raum, einem Kompressor und einem Expansionsorgan, wobei ein erster weiterer Wärmeübertrager vorgesehen ist, der einen Wärmeübergang zwischen dem das Kältemittel führenden Kreislauf und einem Kühlwasserkreislauf ermöglicht.

### Vorteile der Erfindung

Die Erfindung baut auf der gattungsgemäßen Anordnung mit einem ersten weiteren Wärmeübertrager, der einen Wärmeübergang zwischen dem das Kältemittel führenden Kreislauf und einen Kühlwasserkreislauf ermöglicht, dadurch auf, dass Kühlwasser aus dem Kühlwasserkreislauf zuerst in den ersten weiteren Wärmeübertrager und dann erst in den ersten Wärmeübertrager eintritt.

Das Kältemittel, welchem rasch eine hohe Temperatur vermittelt werden kann, ist somit in der Lage, das Kühlwasser des Fahrzeugs zu erwärmen. Dies hat zahlreiche Vorteile. Es ist bereits bekannt, dass zur Erhöhung des Komforts das Fahrzeug vor Fahrtbeginn einige Minuten klimatisiert wird. Bei aufgeheizter Fahrzeugkabine wird der Klimakompressor betrieben, so dass das Kältemittel verdichtet wird. Indem nun nach der Verdichtung das Kältemittel vor der Einleitung in den ersten Wärmeübertrager in den ersten weiteren Wärmeübertrager geleitet wird, kann das Kühlwasser vorgewärmt werden. Auf diese Weise befindet sich die Temperatur des Kühlwassers bereits vor dem Start des Verbrennungsmotors auf Betriebstemperatur. Durch den ersten weiteren Wärmeübertrager ist es ebenfalls möglich, dass das sich im Kühler befindende Wasser nach Bedarf zur Kühlung des Kältemittels im Hochdruck eingesetzt wird.

Vorzugsweise ist der erste weitere Wärmeübertrager in dem das Kältemittel führenden Kreislauf hinter dem Kompressor angeordnet. Auf diese Weise wird das Kältemittel mit hoher Temperatur in den Wärmeübertrager eingeleitet, so dass eine rasche Erwärmung des Kühlwassers im Kühlwasserkreislauf erfolgen kann.

Es ist bevorzugt, dass der Kompressor von einem Starter/Generator betreibbar ist. Dieser Starter/Generator, welcher über eine Kupplung von der Antriebswelle des Verbrennungsmotors getrennt wird, kann somit sowohl die Energie für eine Vorklimatisierung als auch die Energie für die Erwärmung des Kühlwassers vor dem Start des Verbrennungsmotors liefern.

Ebenfalls ist es vorteilhaft, dass eine Wasserpumpe des Kühlwasserkreislaufs von einem Starter/Generator betreibbar ist. Somit wird das Kühlwasser aufgrund der Arbeit des Starter/Generators durch den Wärmeübertrager gefördert.

Von besonderem Vorteil ist es, wenn der erste Wärmeübertrager einen Gaskühler umfasst. Auf diese Weise wird ein Wärmeaustausch in dem ersten Wärmeübertrager nicht, wie bei den konventionellen Kältemitteln, durch Kondensation herbeigeführt. Vielmehr findet ein Wärmeaustausch im Gas statt.

Von besonderem Vorteil ist es, wenn als Kältemittel CO₂ vorgesehen ist. Mit CO₂ lassen sich die Vorteile der Erfindung besonders gut umsetzen, da das CO₂ von dem Kompressor auf Drücke von 100 bis 150 bar unter Einsatz des Starter/Generators verdichtet werden kann, so dass Temperaturen zwischen 140 und 180 °C erreicht werden können. Somit erfolgt eine rasche Erwärmung des Kühlwassers im Kühlwasserkreislauf.

Ebenfalls ist es von Vorteil, wenn ein zweiter weiterer Wärmeübertrager zwischen dem Kühlwasserkreislauf und dem Motoröl vorgesehen ist. Auf diese Weise kann auch das Motoröl vor dem Start des Verbrennungsmotors auf eine erhöhte Temperatur gebracht werden.

In diesem Zusammenhang kann es besonders vorteilhaft sein, dass in dem Motorölkreislauf eine Motorölpumpe vorgesehen ist, die von einem Starter/Generator betreibbar ist. Durch diesen Umstand können sowohl der Kompressor, die Wasserpumpe als auch die Motorölpumpe von dem Starter/Generator betrieben werden. Ebenfalls ist es denkbar, dass im Ölsumpf, das heißt im Bereich der Ölwanne, ein Wärmeübertrager eingesetzt wird, welcher vom Kühlwasser durchströmt wird, so dass die Wärme aus dem Kältemittel über das Kühlwasser des Motors an das Motoröl abgegeben wird. Als Wärmeübertrager kann auch der bei Dieselfahrzeugen vorhandene Wärmeübertrager zwischen Kühlwasser und Öl verwendet werden.

Es hat besondere Vorzüge, wenn ein dritter weiterer Wärmeübertrager zwischen dem Kühlwasserkreislauf und dem Getriebeöl vorgesehen ist. Somit kann auch das Getriebeöl vor Inbetriebnahme des Fahrzeugs auf betriebsnahe Temperaturen gebracht werden.

Es ist besonders nützlich, wenn ein umschaltbares Ventil vorgesehen ist, welches den Kühlwasserkreislauf zur Vermeidung zusätzlicher Wärmeströme umleiten kann. Diese Funktion ist nützlich, wenn keine zusätzlichen Wärmeströme im Kühlwasser während des Betriebs des Verbrennungsmotors erwünscht sind. Der Wärmeübertrager kann grundsätzlich jedoch auch ohne Ventile betrieben werden, da die Kühlwassertemperaturen unterhalb von 120 °C liegen. Die zusätzliche Wärmemenge, die durch den das Kältemittel führenden Kreislauf an das Kühlwasser des Motors abgegeben wird, kann dann über den Kühlwasser-Wärmeübertrager an die Umgebungsluft abgegeben werden. Die Fläche des Kühlwasser-Wärmeübertragers muss hierfür nicht vergrößert werden, da die Wärme auf einem höheren Temperaturniveau anfällt. Die Fläche des Gaskühlers zum Kühlen des Kältemittels kann jedoch verringert werden, da bereits vor Eintritt in den Gaskühler ein Teil der Wärme an das Kühlwasser abgegeben wird.

Es ist von besonderem Vorteil, dass zwischen dem ersten Wärmeübertrager und dem zweiten Wärmeübertrager ein innerer Wärmeübertrager vorgesehen ist. Ein solcher innerer Wärmeübertrager dient der Leistungssteigerung der Klimaanlage. Das Kältemittel wird vor der Expansion im Expansionsorgan durch rückströmendes Kältemittel vorgekühlt. Ebenso wird das rückströmende Kältemittel vor der Kompression in dem Kompressor durch das hinströmende Kältemittel vorgewärmt.

Die Erfindung baut auf dem gattungsgemäßen Verfahren dadurch auf, dass das Kältemittel durch einen ersten weiteren Wärmeübertrager geleitet wird, in dem Wärme zwischen dem das Kältemittel führenden Kreislauf und einem Kühlwasserkreislauf übertragen wird. Auf diese Weise werden die Vorzüge der erfindungsgemäßen Vorrichtung verfahrensmäßig umgesetzt.

Von besonderem Vorteil ist es, wenn der Kompressor von einem Starter/Generator betrieben wird. Dieser Starter/Generator, welcher über eine Kupplung von der Antriebswelle des Verbrennungsmotors getrennt wird, kann somit sowohl die Energie für eine Vorklimatisierung als auch die Energie für die Erwärmung des Kühlwassers vor dem Start des Verbrennungsmotors liefern.

Vorzugsweise wird eine Wasserpumpe des Kühlwasserkreislaufs von einem Starter/Generator betrieben. Somit wird das Kühlwasser aufgrund der Arbeit des Starter/Generators durch den Wärmeübertrager gefördert.

Es ist nützlich, wenn als Kältemittel CO₂ verwendet wird. Mit CO₂ lassen sich die Vorteile der Erfindung besonders gut umsetzen, da das CO₂ von dem Kompressor auf Drücke von 100 bis 150 bar unter Einsatz des Starter/Generators verdichtet werden kann, so dass Temperaturen zwischen 140 und 180 °C erreicht werden können. Somit erfolgt eine rasche Erwärmung des Kühlwassers im Kühlwasserkreislauf.

Von besonderem Vorteil ist es, dass das Kühlwasser in dem Kühlwasserkreislauf durch einen zweiten weiteren Wärmeübertrager geleitet wird, in welchem ein Wärmeaustausch mit dem Motoröl erfolgt. Auf diese Weise kann auch das Motoröl vor dem Start des Verbrennungsmotors auf eine erhöhte Temperatur gebracht werden.

Ebenso ist es nützlich, dass Motoröl durch den zweiten weiteren Wärmeübertrager mit einer Motorölpumpe gepumpt wird und dass die Motorölpumpe von einem Starter/Generator betrieben wird. Durch diesen Umstand können sowohl der Kompressor, die Wasserpumpe als auch die Motorölpumpe von dem Starter/Generator betrieben werden. Ebenfalls ist es denkbar, dass im Ölsumpf, das heißt im Bereich der Ölwanne, ein Wärmeübertrager eingesetzt wird, welcher vom Kühlwasser durchströmt wird, so dass die Wärme aus dem Kältemittel über das Kühlwasser des Motors an das Motoröl abgegeben wird. Als.Wärmeübertrager kann auch der bei Dieselfahrzeugen vorhandene Wärmeübertrager zwischen Kühlwasser und Öl verwendet werden.

Es ist bevorzugt, wenn das Kühlwasser in dem Kühlwasserkreislauf durch einen dritten weiteren Wärmeübertrager geleitet wird, in welchem ein Wärmeaustausch mit dem Getriebeöl erfolgt. Somit kann auch das Getriebeöl vor Inbetriebnahme des Fahrzeugs auf betriebsnahe Temperaturen gebracht werden.

Von besonderem Vorteil ist es, wenn ein umschaltbares Ventil verwendet wird, welches den Kühlwasserkreislauf zur Vermeidung zusätzlicher Wärmeströme umleitet. Diese Funktion ist nützlich, wenn keine zusätzlichen Wärmeströme im Kühlwasser während des Betriebs des Verbrennungsmotors erwünscht sind. Der Wärmeübertrager kann grundsätzlich jedoch auch ohne Ventile betrieben werden, da die Kühlwassertemperaturen unterhalb von 120 °C liegen. Die zusätzliche Wärmemenge, die durch den das Kältemittel führenden Kreislauf an das Kühlwasser des Motors abgegeben wird, kann dann über den Kühlwasser-Wärmeübertrager an die Umgebungsluft abgegeben werden. Die Fläche des Kühlwasser-Wärmeübertragers muss hierfür nicht vergrößert werden, da die Wärme auf einem höheren Temperaturniveau anfällt. Die Fläche des Gaskühlers zum Kühlen des Kältemittels kann jedoch verringert werden, da bereits vor. Eintritt in den Gaskühler ein Teil der Wärme an das Kühlwasser abgegeben wird.

Das Verfahren ist weiterhin dadurch vorteilhaft weitergebildet, dass zwischen dem ersten Wärmeübertrager und dem zweiten Wärmeübertrager ein innerer Wärmeübertrager verwendet wird. Ein solcher innerer Wärmeübertrager dient der Leistungssteigerung der Klimaanlage. Das Kältemittel wird vor der Expansion im Expansionsorgan durch rückströmendes Kältemittel vorgekühlt. Ebenso wird das rückströmende Kältemittel vor der Kompression in dem Kompressor durch das hinströmende Kältemittel vorgewärmt.

Der Erfindung liegt die Erkenntnis zugrunde, dass insbesondere bei Klimaanlagen, welche CO₂ als Kältemittel verwenden, eine vorteilhafte Vorwärmung des Kühlwassers erfolgen kann. Hierzü wird ein zusätzlicher Wärmeübertrager vorgesehen, wobei die Vorwärmung des Kühlwassers insbesondere mit der Vorklimatisierung des Innenraums des Fahrzeugs einhergehen kann.

### Zeichnungen

Die Erfindung wird nun mit Bezug auf die begleitenden Zeichnungen anhand bevorzugter Ausführungsformen beispielhaft erläutert.

Dabei zeigt:
- Figur 1: eine schematische Teilansicht einer erfindungsgemäßen Anordnung;
- Figur 2: ein Zustandsdiagramm zur Erläuterung von Vorgängen bei einer erfindungsgemäßen Anordnung; und
- Figur 3: eine schematische Darstellung einer Anordnung des Standes der Technik.

### Beschreibung der Ausführungsbeispiele

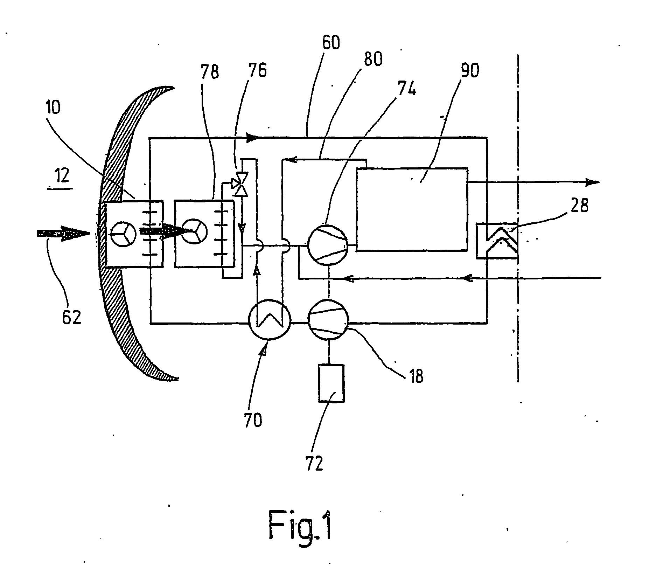

Figur 1 zeigt einen Teil einer erfindungsgemäßen Anordnung. Der nicht dargestellte Teil rechts der Strich-Punkt-Linie, das heißt rechts von dem inneren Wärmeübertrager 28 entspricht der Anordnung,' welche in Figur 3 rechts des inneren Wärmeübertragers 128 dargestellt ist und bereits im Zusammenhang mit dem Stand der Technik beschrieben wurde.

In Figur 1 sind zwei Kreisläufe dargestellt. Zum Einen ist der Kreislauf 60 eines Kältemittels zum Betrieb der Klimaanlage gezeigt. Zum Anderen ist ein Kühlwasserkreislauf 80 zur Kühlung eines Verbrennungsmotors 90 dargestellt. Das Kältemittel wird von einem Kompressor 18 komprimiert. Dieser Kompressor. 18 wird vor dem Start des Verbrennungsmotors 90 von einem Starter/Generator 72 betrieben. Bevor das komprimierte Kältemittel in den ersten Wärmeübertrager 10 zum Zwecke der Abgabe von Wärme eintritt, tritt das Kältemittel in den ersten weiteren Wärmeübertrager 70 ein. In diesen Wärmeübertrager 70 tritt ebenfalls Kühlwasser ein, welches von dem Kühlwasserkreislauf 80 transportiert wird. Die Wasserpumpe 74 kann zum Zwecke des Transports des Kühlwassers ebenfalls von dem Starter/Generator 72 oder auf andere Weise elektrisch betrieben werden. Auf diese Weise wird Wärme an das Kühlwasser abgegeben, so dass seine Temperatur in betriebsnahe Bereiche gelangen kann. Mit dem Ventil 76 kann im normalen Betrieb des Verbrennungsmotors 90 verhindert werden, dass zusätzliche Wärmeströme im Kühlwasser entstehen. Es ist allerdings auch möglich, die Anlage ohne das Ventil 76 zu betreiben, da das Kühlwasser unterhalb von Temperaturen im Bereich von 120 °C bleibt. Die zusätzliche Wärmemenge, die durch den Kreislauf 60 und den ersten weiteren Wärmeübertrager 70 in den Kühlwasserkreislauf gelangt, kann über den Kühlwasser-Wärmeübertrager 78 an die Umgebungsluft abgegeben werden. Die Fläche des Kühlwasser-Wärmeübertragers 78 muss hierfür nicht vergrößert werden, da die Wärme auf einem höheren Temperaturniveau anfällt. Die Fläche des als Gaskühler ausgelegten ersten Wärmeübertragers 10 kann jedoch verringert werden, da bereits vor Eintritt in den Gaskühler ein Teil der Wärme an das Kühlwasser abgegeben wird.

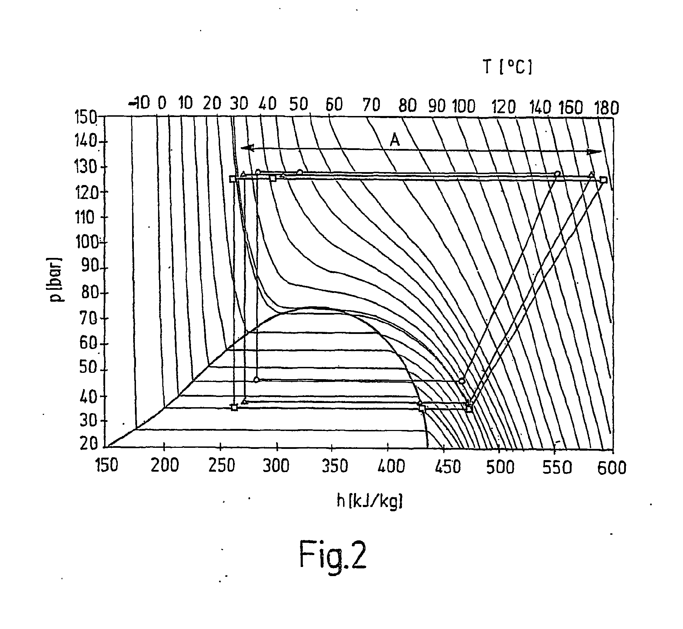

Figur 2 zeigt ein thermodynamisches Zustandsdiagramm für CO₂, in welchem der Druck p gegen die spezifische Enthal-, pie h aufgetragen ist. Zusätzlich sind Isothermen in das Diagramm eingezeichnet, wobei die zugehörigen Temperaturen am oberen Rand des Diagramms angegeben sind. Die Isothermen sind in Abständen von 10 °C angegeben. Zusätzlich ist die Isotherme bei 31,1 °C eingezeichnet, welche die kritische Temperatur von CO₂ kennzeichnet.

Es sind drei verschiedene Zyklen in das Zustandsdiagramm gemäß Figur 2 eingezeichnet. Der mit offenen Kreisen gekennzeichnete Zyklus entspricht einem Betrieb im Leerlauf. Der mit offenen Dreiecken gekennzeichnete Zyklus entspricht einem Fahrbetrieb bei 22 km/h. Der mit offenen Quadraten gekennzeichnete Zyklus entspricht einem Fahrbetrieb mit 64 km/h.

Das Diagramm wird ausgehend von einer unteren rechten Ecke eines beliebigen der Zyklen erläutert. Zunächst findet eine Kompression statt, wobei hierdurch die Temperatur des Mediums erhöht wird. Eine derartige Kompression kann beispielsweise durch den Kompressor 18 gemäß Figur 1 veranlasst werden. Das Medium gelangt somit in einen Zustand hoher Temperatur mit hohem Druck, wobei ebenfalls die Enthalpie erhöht wird. Ausgehend von der oberen rechten Ecke der Zyklen wird nun die Wärmeenergie im Wesentlichen isobar abgegeben. Diese Abgabe der Wärmeenergie erfolgt bei allen Zyklen im Wesentlichen oberhalb der kritischen Temperatur von CO₂, das heißt, es erfolgt eine Gaskühlung. Der Bereich der Gaskühlung ist durch den Doppelpfeil A markiert. Das System gelangt zu Zuständen entsprechend der oberen linken Ecke der Abläufe, das heißt zu Zuständen mit verringerter Enthalpie und verringerter Temperatur. Daraufhin findet eine Expansion statt, so dass sich sowohl die Temperatur als auch der Druck bei im Wesentlichen unveränderter Enthalpie verändern. Es wird der untere linke Punkt der Zyklen erreicht. In diesen Zuständen ist das CO₂ teilweise verflüssigt. Dies ist möglich, da die Temperatur unterkritisch ist. Man bezeichnet die Vorgänge aufgrund des Überschreitens der kritischen Temperäturgrenze als "transkritisch". Nachfolgend wird von dem Kältemittel Wärme aufgenommen, so dass ohne Druckveränderung der untere rechte Punkt der jeweiligen Zyklen erreicht wird. Damit sind die Zyklen geschlossen.

## Patentansprüche

1. Anordnung zum Kühlen mit
- einem ein Kältemittel führenden Kreislauf (60),
- einem ersten Wärmeübertrager (10) zur Abgabe von Wärme an ein Wärmereservoir (12),
- einem zweiten Wärmeübertrager (114) zur Entnahme von Wärme aus einem zu kühlenden Raum (116),
- einem Kompressor (18) und einem Expansionsorgan (12),
- wobei ein erster weiterer Wärmeübertrager (70) vorgesehen ist, der einen Wärmeübergang zwischen dem das Kältemittel führenden Kreislauf und einem Kühlwasserkreislauf (80) ermöglicht,
**dadurch gekennzeichnet, dass** Kühlwasser aus dem Kühlwasserkreislauf (80) zuerst in den ersten weiteren Wärmeübertrager (70) und dann erst in den ersten Wärmeübertrager (10) eintritt.

2. Anordnung nach Anspruch 1, **dadurch gekennzeichnet, dass** der erste weitere Wärmeübertrager (70) in dem das Kältemittel führenden Kreislauf (60) hinter dem Kompressor (18) angeordnet ist.

3. Anordnung nach Anspruch 1 oder 2, **dadurch gekennzeichnet, dass** der Kompressor (18) von einem Starter/Generator (72) oder einer Batterie direkt elektrisch betreibbar ist.

4. Anordnung nach einem der vorangehenden Ansprüche, **dadurch gekennzeichnet, dass** eine Wasserpumpe (74) des Kühlwasserkreislaufs (80) von einem Starter/Generator (72) oder einer Batterie direkt elektrisch betreibbar ist.

5. Anordnung nach einem der vorangehenden Ansprüche, **dadurch gekennzeichnet, dass** der erste Wärmeübertrager (10) einen Gaskühler umfasst.

6. Anordnung nach einem der vorangehenden Ansprüche, **dadurch gekennzeichnet, dass** als Kältemittel CO₂ vorgesehen ist.

7. Anordnung nach einem der vorangehenden Ansprüche, **dadurch gekennzeichnet, dass** ein zweiter weiterer Wärmeübertrager zwischen dem Kühlwasserkreislauf und dem Motoröl vorgesehen ist.

8. Anordnung nach einem der vorangehenden Ansprüche, **dadurch gekennzeichnet, dass** in dem Motorölkreislauf eine Motorölpumpe vorgesehen ist, die von einem Starter/Generator oder einer Batterie direkt elektrisch betreibbar ist.

9. Anordnung nach einem der vorangehenden Ansprüche, **dadurch gekennzeichnet, dass** ein dritter weiterer Wärmeübertrager zwischen dem Kühlwasserkreislauf und dem Getriebeöl vorgesehen ist.

10. Anordnung nach einem der vorhergehenden Ansprüche, **dadurch gekennzeichnet, dass** ein umschaltbares Ventil (76) vorgesehen ist, welches den Kühlwasserkreislauf zur Vermeidung von Wärmeströmen umleiten kann.

11. Anordnung nach einem der vorhergehenden Ansprüche, **dadurch gekennzeichnet, dass** zwischen dem ersten Wärmeübertrager (10) und dem zweiten Wärmeübertrager (114) ein innerer Wärmeübertrager (28) vorgesehen ist.

12. Verfahren zum Kühlen mittels einer Anordnung mit einem Kältemittel führenden Kreislauf (60), einem ersten Wärmeübertrager (10) zur Abgabe von Wärme an ein Wärmereservoir (12), einem zweiten Wärmeübertrager (114) zur Entnahme von Wärme aus einem zu kühlenden Raum (116), einem Kompressor (18) und einem Expansionsorgan (120), mit den Schritten:
- Betreiben des Kompressors (18),
- Leiten des Kältemittels durch den das Kältemittel führenden Kreislauf (60), und
- Leiten des Kältemittels durch einen ersten weiteren Wärmeübertrager (70), in dem Wärme zwischen dem das Kältemittel führenden Kreislauf (60) und einem Kühlwasserkreislauf (80) übertragen wird,
**dadurch gekennzeichnet, dass** Kühlwasser aus dem Kühlwasserkreislauf (80) zuerst in den ersten weiteren Wärmeübertrager (70) und dann erst in den ersten Wärmeübertrager (10) geleitet wird.

13. Verfahren nach Anspruch 12, **dadurch gekennzeichnet, dass** der Kompressor (18) von einem Starter/Generator (72) oder einer Batterie direkt elektrisch betrieben wird.

14. Verfahren nach Anspruch 12 oder 13, **dadurch gekennzeichnet, dass** eine Wasserpumpe (74) des Kühlwasserkreislaufs (80) von einem Starter/Generator (72) oder einer Batterie direkt elektrisch betrieben wird.

15. Verfahren nach einem der Ansprüche 12 bis 14, **dadurch gekennzeichnet, dass** als Kältemittel CO₂ verwendet wird.

16. Verfahren nach einem der Ansprüche 12 bis 15, **dadurch gekennzeichnet, dass** das Kühlwasser in dem Kühlwasserkreislauf durch einen zweiten weiteren Wärmeübertrager geleitet wird, in welchem ein Wärmeaustausch mit dem Motoröl erfolgt.

17. Verfahren nach einem der Ansprüche 12 bis 16, **dadurch gekennzeichnet,**
- **dass** Motoröl durch den zweiten weiteren Wärmeübertrager mit einer Motorölpumpe gepumpt wird und
- **dass** die Motorölpumpe von einem Starter/Generator oder einer Batterie direkt elektrisch betrieben wird.

18. Verfahren nach einem der Ansprüche 12 bis 17, **dadurch gekennzeichnet, dass** das Kühlwasser in dem Kühlwasserkreislauf durch einen dritten weiteren Wärmeübertrager geleitet wird, in welchem ein Wärmeaustausch mit dem Getriebeöl erfolgt.

19. Verfahren nach einem der Ansprüche 12 bis 18, **dadurch gekennzeichnet, dass** ein umschaltbares Ventil verwendet wird, welches den Kühlwasserkreislauf zur Vermeidung zusätzlicher Wärmeströme umleitet.

20. Verfahren nach einem der Ansprüche 12 bis 19, **dadurch gekennzeichnet, dass** zwischen dem ersten Wärmeübertrager (10) und dem zweiten Wärmeübertrager (114) ein innerer Wärmeübertrager (28) verwendet wird.

## Claims

1. Arrangement for cooling, with
- a circuit (60) carrying a refrigerant,
- a first heat exchanger (10) for the discharge of heat to a heat reservoir (12),
- a second heat exchanger (114) for the extraction of heat from a space (116) to be cooled,
- a compressor (18) and an expansion member (12),
- a first further heat exchanger (70) being provided, which allows heat transfer between the circuit carrying the refrigerant and a cooling-water circuit (80),
**characterized in that** cooling water from the cooling-water circuit (80) passes firstly to the first further heat exchanger (70) and only then into the first heat exchanger (10).

2. Arrangement according to Claim 1, **characterized in that** the first further heat exchanger (70) is arranged, downstream of the compressor (18), in the circuit (60) carrying the refrigerant.

3. Arrangement according to Claim 1 or 2, **characterized in that** the compressor (18) can be directly operated electrically by a starter/alternator (72) or a battery.

4. Arrangement according to one of the preceding claims, **characterized in that** a water pump (74) of the cooling-water circuit (80) can be directly operated electrically by a starter/alternator (72) or a battery.

5. Arrangement according to one of the preceding claims, **characterized in that** the first heat exchanger (10) comprises a gas cooler.

6. Arrangement according to one of the preceding claims, **characterized in that** the refrigerant provided is CO₂.

7. Arrangement according to one of the preceding claims, **characterized in that** a second further heat exchanger is provided between the cooling-water circuit and the engine oil.

8. Arrangement according to one of the preceding claims, **characterized in that** an engine-oil pump which can be directly operated electrically by a starter/alternator or a battery is provided in the engine-oil circuit.

9. Arrangement according to one of the preceding claims, **characterized in that** a third further heat exchanger is provided between the cooling-water circuit and the transmission oil.

10. Arrangement according to one of the preceding claims, **characterized in that** a reversible valve (76) is provided, which can divert the cooling-water circuit in order to avoid heat flows.

11. Arrangement according to one of the preceding claims, **characterized in that** an inner heat exchanger (28) is provided between the first heat exchanger (10) and the second heat exchanger (114) .

12. Method for cooling by means of an arrangement with a circuit (60) carrying refrigerant, with a first heat exchanger (10) for the discharge of heat to a heat reservoir (12), with a second heat exchanger (114) for the extraction of heat from a space (116) to be cooled, with a compressor (18) and with an expansion member (120), the said method having the steps:
- operation of the compressor (18),
- conduction of the refrigerant through the circuit (60) carrying the refrigerant, and
- conduction of the refrigerant through a first further heat exchanger (70), in which heat is transmitted between the circuit (60) carrying the refrigerant and a cooling-water circuit (80),
**characterized in that** cooling water from the cooling-water circuit (80) is conducted first into the first further heat exchanger (70) and only then into the first heat exchanger (10).

13. Method according to Claim 12, **characterized in that** the compressor (18) is directly operated electrically by a starter/alternator (72) or a battery.

14. Method according to Claim 12 or 13, **characterized in that** a water pump (74) of the cooling-water circuit (80) is directly operated electrically by a starter/alternator (72) or a battery.

15. Method according to one of Claims 12 to 14, **characterized in that** the refrigerant used is CO₂.

16. Method according to one of Claims 12 to 15, **characterized in that** the cooling water in the cooling-water circuit is conducted through a second further heat exchanger in which heat exchange with the engine oil takes place.

17. Method according to one of Claims 12 to 16, **characterized**
- **in that** the engine oil is pumped through the second further heat exchanger by means of an engine-oil pump, and
- **in that** the engine-oil pump is directly operated electrically by a starter/alternator or a battery.

18. Method according to one of Claims 12 to 17, **characterized in that** the cooling water in the cooling-water circuit is conducted through a third further heat exchanger in which heat exchange with the transmission oil takes place.

19. Method according to one of Claims 12 to 18, **characterized in that** a reversible valve is used, which diverts the cooling-water circuit in order to avoid additional heat flows.

20. Method according to one of Claims 12 to 19, **characterized in that** an inner heat exchanger (28) is used between the first heat exchanger (10) and the second heat exchanger (114).

## Revendications

1. Dispositif de refroidissement comprenant
- un circuit (60) transportant un fluide frigorigène
- un premier échangeur thermique (10) pour envoyer de la chaleur à un réservoir calorifique (12),
- un deuxième échangeur thermique (114) pour évacuer la chaleur hors d'une pièce à refroidir (116),
- un compresseur (18) et un organe d'expansion (12),
- un autre premier échangeur thermique (70) étant prévu pour transférer de la chaleur entre le circuit transportant le fluide frigorigène et un circuit d'eau réfrigérante (80),
**caractérisé en ce que**
l'eau sortant du circuit d'eau réfrigérante (80) entre tout d'abord dans l'autre premier échangeur thermique (70), puis dans le premier échangeur thermique (10).

2. Dispositif selon la revendication 1,
**caractérisé en ce que**
l'autre premier échangeur thermique (70) est disposé derrière le compresseur (18) dans le circuit (60) transportant le fluide frigorigène.

3. Dispositif selon la revendication 1 ou 2,
**caractérisé en ce que**
le compresseur (18) peut être directement actionné électriquement par un démarreur/générateur (72) ou par une batterie.

4. Dispositif selon l'une quelconque des revendications précédentes,
**caractérisé en ce qu'**
une pompe à eau (74) du circuit d'eau réfrigérante (80) peut être directement actionné électriquement par un démarreur/générateur (72) ou par une batterie.

5. Dispositif selon l'une quelconque des revendications précédentes,
**caractérisé en ce que**
le premier échangeur thermique (10) comprend un refroidisseur à gaz.

6. Dispositif selon l'une quelconque des revendications précédentes,
**caractérisé en ce que**
le fluide frigorigène est du CO2.

7. Dispositif selon l'une quelconque des revendications précédentes,
**caractérisé en ce qu'**
un autre deuxième échangeur thermique est prévu entre le circuit d'eau réfrigérante et l'huile moteur.

8. Dispositif selon l'une quelconque des revendications précédentes,
**caractérisé en ce qu'**
une pompe à huile prévue dans le circuit d'huile moteur peut être directement actionnée électriquement par un démarreur/générateur ou par une batterie.

9. Dispositif selon l'une quelconque des revendications précédentes,
**caractérisé en ce qu'**
un autre troisième échangeur thermique est prévu entre le circuit d'eau réfrigérante et l'huile à engrenages.

10. Dispositif selon l'une quelconque des revendications précédentes,
**caractérisé en ce qu'**
une soupape (76) commutable peut dévier le circuit d'eau réfrigérante afin d'empêcher des flux de chaleur.

11. Dispositif selon l'une quelconque des revendications précédentes,
**caractérisé en ce qu'**
un échangeur thermique intérieur (28) est prévu entre le premier (10) et le deuxième échangeur thermique (114).

12. Procédé de refroidissement à l'aide d'un dispositif comprenant un circuit (60) transportant du fluide frigorigène, un premier échangeur thermique (10) pour envoyer de la chaleur à un réservoir calorifique (12), un deuxième échangeur thermique (114) pour évacuer la chaleur hors d'une pièce à refroidir (116), un compresseur (18) et un organe d'expansion (120), comprenant les étapes de :
- mise en route du compresseur (18),
- guidage du fluide frigorigène par le circuit (60) qui le transporte, et
- guidage du fluide frigorigène par un autre premier échangeur thermique (70) dans lequel de la chaleur est transportée entre le circuit (60) transportant du fluide frigorigène et un circuit d'eau réfrigérante (80),
**caractérisé en ce que**
l'eau sortant du circuit d'eau réfrigérante (80) doit d'abord être dirigée dans l'autre premier échangeur thermique (70), et ensuite seulement dans le premier échangeur thermique (10).

13. Procédé selon la revendication 12,
**caractérisé en ce que**
le compresseur (18) est directement actionné électriquement par un démarreur/générateur (72) ou par une batterie.

14. Procédé selon la revendication 12 ou 13,
**caractérisé en ce qu'**
une pompe à eau (74) du circuit d'eau réfrigérante (80) est directement actionnée électriquement par un démarreur/générateur (72) ou par une batterie.

15. Procédé selon l'une quelconque des revendications 12 à 14,
**caractérisé en ce que**
le fluide frigorigène est du CO2.

16. Procédé selon l'une quelconque des revendications 12 à 15,
**caractérisé en ce que**
l'eau est dirigée dans le circuit d'eau réfrigérante par un autre deuxième échangeur thermique dans lequel un échange thermique se produit avec l'huile moteur.

17. Procédé selon l'une quelconque des revendications 12 à 16, **caractérisé en ce que**
- l'huile moteur est pompée par l'autre deuxième échangeur thermique avec une pompe à huile moteur, et
- la pompe à huile moteur est directement actionnée électriquement par un démarreur/générateur ou par une batterie.

18. Procédé selon l'une quelconque des revendications 12 à 17,
**caractérisé en ce que**
l'eau est guidée dans le circuit d'eau réfrigérante par un autre troisième échangeur thermique dans lequel un échange thermique a lieu avec l'huile à engrenages.

19. Procédé selon l'une quelconque des revendications 12 à 18,
**caractérisé en ce qu'**
on utilise une soupape commutable qui dévie le circuit d'eau réfrigérante pour empêcher des flux de chaleur supplémentaires.

20. Procédé selon l'une quelconque des revendications 12 à 19,
**caractérisé en ce qu'**
on utilise un échangeur thermique (28) intérieur entre le premier échangeur thermique (10) et le deuxième échangeur thermique (114).
